# EUROPEAN PATENT SPECIFICATION

(11) **EP 2 192 642 B1**
(45) Date of publication and mention of the grant of the patent: **22.02.2017**
(21) Application number: 09177629.4
(22) Date of filing: 01.12.2009
(51) Int. Cl.: H01M 4/62, H01M 4/134, H01M 4/133, H01M 4/587, H01M 4/38, H01M 4/36, H01M 10/0525, H01M 4/1393, H01M 4/1395

(54) **Negative electrode active material, negative electrode having the same and lithium secondary battery**
Aktives Negativelektrodenmaterial, Negativelektrode damit und Lithium-Akkumulator
Matériau actif d'électrode négative, électrode négative dotée de celui-ci, et batterie au lithium secondaire

(30) Priority: 01.12.2008 KR 20080120514
(43) Date of publication of application: 02.06.2010
(73) Proprietor: Samsung SDI Co., Ltd., Yongin-si, Gyeonggi-do 17084 (KR)
(72) Inventor: Kim, Bong-Chull, Suwon-si Gyeonggi-do (KR)
(74) Representative: Taor, Simon Edward William

(56) References cited:
- EP-A2- 1 903 628
- JP-B2- 3 985 143
- US-A1- 2005 136 330
- US-A1- 2006 134 516
- US-A1- 2007 166 616
- US-B1- 6 391 495

## Description

The present invention relates to a negative electrode active material, a negative electrode having the same and a lithium secondary battery, and more particularly, to a lithium secondary battery using a metal-carbon composite negative electrode active material so as to exhibit excellent cycle characteristics.

While lithium metals have been used as negative electrode active materials so far, these metals can cause a short circuit in a battery due to formation of dendrites, resulting in a risk of explosion. For this reason, in recent times, carbonaceous materials have been used to replace the lithium metals as negative electrode active materials.

The carbonaceous active materials used as negative electrode active materials for a lithium battery include crystalline carbons such as graphite and artificial graphite, and amorphous carbons such as soft carbon and hard carbon.

However, the amorphous carbon has high capacitance but is very irreversible in a charge/discharge cycle, and the crystalline carbon, e.g., graphite, has a sufficiently high theoretical marginal capacitance of 372 mAh/g to be used as a negative electrode active material but is rapidly degraded in lifespan.

Also, the graphite or carbonaceous active materials cannot be applied to a negative electrode in development of a high capacitance lithium battery since its theoretical marginal capacitance is relatively high but does not exceed 380 mAh/g.

To improve these problems, metal-graphite composite negative electrode active materials, e.g., aluminum (Al), germanium (Ge), silicon (Si), tin (Sn), zinc (Zn) and lead (Pb), are being actively studied, and lithium batteries using these metals as negative electrode active materials are also being studied.

However, in the metallic negative electrode active material having high capacitance, lithium may be intercalated into an inorganic particle such as Si or Sn included in the negative electrode active material described above by charging, and thus the particle may be expanded to about 300 to 400%.

Further, when lithium is deintercalated by discharging, the inorganic particle is contracted. As the charge/discharge cycle is repeated, conductivity between the active materials may be decreased due to volume change in the charge/discharge cycle, or a negative electrode active material may be peeled off from a negative electrode collector, resulting in a drastic decrease in cycle characteristics.

The present invention provides a negative electrode active material having improved cycle characteristics by inhibiting volume change of a metal particle in a metal-carbon composite negative electrode active material, a negative electrode having the same, and a lithium secondary battery.

US2005/0136630 discloses a carbon-coated silicon particle with a graphite core as the anode material for a lithium battery. US2007/0166616 discloses a graphite core coated with a carbonaceous material for an anode material.

JP3985143 B2 discloses a carbon core particle supporting silicon particles coated with a carbon material layer having thickness of approximately 1 µm.

According to the present invention, a negative electrode active material includes: a graphite core particle; a carbon coating layer coating the graphite core particle; and metal particles dispersed in the carbon coating layer, wherein the carbon coating layer is coated to a thickness of 1 to 4µm.

The graphite core particle has a porosity of more than 0 to 0.07 cc/ g.

According to another aspect of the present invention, a negative electrode includes a negative electrode collector, and a negative electrode active material. Here, the negative electrode active material includes: a graphite core particle; a carbon coating layer coating the graphite core particle; and metal particles dispersed in the carbon coating layer, wherein the carbon coating layer is coated to a thickness of 1 to 4µm.

The graphite core particle has a porosity of more than 0 to 0.07 cc/g.

According to still another aspect of the present invention, a lithium secondary battery includes a positive electrode having a positive electrode active material, a negative electrode having a negative electrode active material, a separator separating the positive electrode from the negative electrode and an electrolyte. Here, the negative electrode active material includes: a graphite core particle; a carbon coating layer coating the graphite core particle; and metal particles dispersed in the carbon coating layer, wherein the carbon coating layer is coated to a thickness of 1 to 4µm.

The graphite core particle has a porosity of more than 0 to 0.07 cc/g.

The negative electrode active material may have a porosity of more than 0 to 0.08cc/g. The negative electrode active material may have a porosity of more than 0 to 0.03cc/g.

The graphite core particle may have a porosity of more than 0 to 0.025cc/g.

The carbon coating layer may be coated to a thickness of 1 to 4µm.

The above and other features of the present invention will be described in reference to specific exemplary embodiments thereof with reference to the attached drawings in which:
FIG. 1 is a schematic cross-sectional view of a negative electrode active material according to an exemplary embodiment of the present invention;
FIG. 2 is a schematic cross-sectional view of a conventional negative electrode active material;
FIG. 3A is a photograph showing a cross-section of the negative electrode active material according to the present invention; and
FIG. 3B is a photograph showing a cross-section of the conventional negative electrode active material.

The above and other objects, features and functions of the present invention will be described more fully with reference to accompanying drawings. Moreover, in the drawings, the length and thickness of an element or a region may be exaggerated for clarity. Also, like numerals denote like elements throughout the specification.

A negative electrode active material, a negative electrode having the same and a lithium secondary battery according to the present invention will be described below.

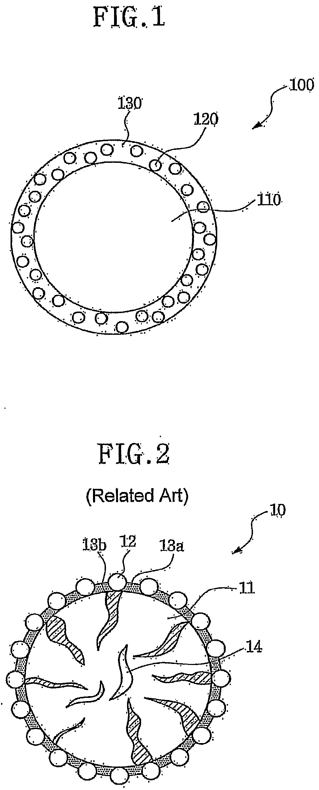

First, the negative electrode active material according to the present invention will be described with reference to FIG. 1.

FIG. 1 is a schematic cross-sectional view of a negative electrode active material according to an exemplary embodiment of the present invention.

Referring to FIG. 1, a negative electrode active material 100 according to the present invention includes a graphite core particle 110, a carbon coating layer 130 coating the graphite core particle 110, and metal particles 120 dispersed in the carbon coating layer 130.

The graphite core particle 110 is a material capable of reversibly intercalating and deintercalating lithium, which may be formed of at least one selected from the group consisting of artificial graphite, natural graphite, graphitized carbon fiber, graphitized mesocarbon microbead and amorphous carbon.

Here, the graphite core particle may have an average diameter of 1 to 20µm. When the average diameter of the graphite core particle is less than 1µm, a metal particle disposed in the carbon coating layer may not be disposed on or around a surface of the graphite core particle. However, when the average diameter of the graphite core particle is more than 20µm, the carbon coating layer may not be uniformly coated.

The graphite core particle may be currently used for a negative electrode of a battery. It has a porosity of 0.07cc/g or less, and preferably 0.025cc/g or less. As described above, it is preferable that the graphite core particle according to the present invention has no pore. When the porosity is more than 0.07cc/g, a material for the carbon coating layer is introduced into a pore formed in the graphite core particle, thereby forming a relatively thinner carbon coating layer even with the same amount of the material. Thus, it is difficult to dispose the metal particles on or around the surface of the graphite core particle due to the carbon coating layer, resulting in degradation in cycle characteristics.

Moreover, a porosity of a complex formed of the graphite core particle is measured with powder of an electrode plate disassembled in a discharge state after a battery cell is manufactured. Here, the measured porosity may be 0.08cc/g or less, and preferably 0.03cc/g or less.

Subsequently, the carbon coating layer 130 may be formed by annealing a polymer material such as vinyl-based resin, cellulose-based resin, phenol-based resin, pitch-based resin or tar-based resin, and may be in an amorphous state that is relatively less graphitized.

When the carbon coating layer 130 is in an amorphous state that is relatively less graphitized, an electrolyte may not be dissolved when it is even in contact with the carbon coating layer, resulting in an increase in charge/discharge efficiency of a material for the negative electrode.

Thus, since the carbon coating layer 130 has low reactivity to the electrolyte and acts as a reaction protection layer inhibiting the dissolution of the electrolyte since it coats a metal nanoparticle 120 (hereinafter, metal particle) having relatively high reactivity to the electrolyte.

In addition, the metal particles 120 are dispersed in the carbon coating layer 130, and particularly, on or around the surface of the graphite core particle, so that the metal particles 120 having relatively high resistivity are not separated from the graphite core particle 110, and all of the metal particles 120 can contribute to the charge/discharge reaction.

Here, the carbon coating layer may be formed to a thickness of 1 to 4µm. When the thickness of the carbon coating layer is less than 1µm, it is difficult to dispose the metal particles 120 on or around the surface of the graphite core particle, resulting in degradation in cycle characteristics, whereas when the thickness of the carbon coating layer is more than 4µm, irreversible capacitance may be increased due to the amorphous carbon.

Then, the metal particle 120 is a metallic material capable of forming an alloy with lithium, which may reversibly intercalate and deintercalate lithium ions, and has a higher ability to intercalate lithium ions than the graphite core particle, so that the total charge/discharge capacitance of the negative electrode active material can be increased.

The metal particle 120 is formed of at least one of the metals or metal compounds forming an alloy with lithium. The metal forming an alloy with lithium may include at least one selected from the group consisting of Cr, Sn, Si, Al, Mn, Ni, Zn, Co, In, Cd, Bi, Pb and V.

Here, the metal particle is preferably Si that has the highest theoretical capacitance of 4017mAh/g.

The metal particle 120 is formed to have an average particle size of 0.01 to 1.0 µm, and preferably 0.05 to 0.5 µm. When the particle size of the metal particle 120 is less than 0.01 µm, agglomeration between the particles may be increased, resulting in non-uniform dispersion of the metal particles in the carbon particle, so that metal particles are difficult to be used in a powder type, and the dissolution of the electrolyte may be stimulated due to the large specific area. On the other hand, when the particle size of the metal particle 120 is more than 1.0 µm, an absolute volume of the metal particle may be increased during charge/discharge, resulting in degradation in capacitance retention characteristics.
perform reversible charge/discharge in terms of lithium like the carbonaceous material. As a result, the capacitance and energy density of the negative electrode active material may be increased, and may intercalate and deintercalate more lithium ions than the negative electrode active material using the carbonaceous material, thereby manufacturing a high capacity battery.

Here, the content of the metal particle may be 3 to 20wt% with respect to 100wt% of the negative electrode active material. When the content of the metal particle is less than 3wt%, the energy density may be decreased, whereas when the content of the metal particle is more then 20wt%, the charge/discharge efficiency may be decreased.

Now, the negative electrode active material according to the present invention will be compared with the conventional negative electrode active material.

FIG. 2 is a schematic cross-sectional view of the conventional negative electrode active material.

Referring to FIG. 2, the conventional negative electrode active material 10 is formed of a graphite core particle 11, metal particles 12 disposed on a surface of the graphite core particle and a carbon coating layer 13a coating the graphite core particle 11 and the metal particles 12.

That is, in the negative electrode active material according to the present invention, the metal particles are dispersed in the carbon coating layer, and thus disposed on or around the surface of the graphite core particle. However, in the conventional negative electrode active material, the metal particles are attached to a surface of the graphite core particle, and then coated with the carbon coating layer together with the graphite core particle.

Moreover, since the conventional negative electrode active material has high porosity of the graphite core particle, as shown in FIG. 2, a material for the carbon coating layer 13a is introduced into a pore 14 in the graphite core particle, and thus a material for a carbon coating layer 13b is present in the pore.

Thus, in the conventional negative electrode active material, although the carbon coating layer is formed of the same amount of material as that in the present invention, it is thinner than that in the present invention. As a result, the carbon coating layer is difficult to allow the metal particles to be disposed on or around the surface of the graphite core particle, resulting in degradation in cycle characteristics.

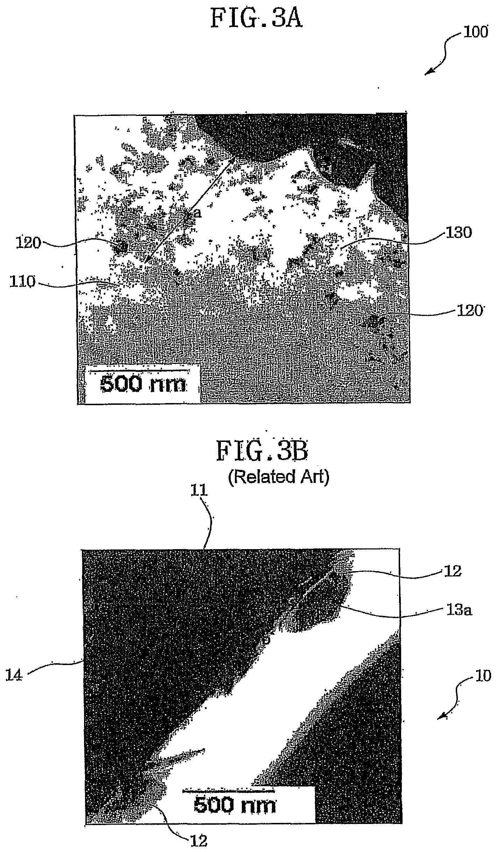

FIG. 3A is a photograph showing a cross-section of the negative electrode active material according to the present invention, and FIG. 3B is a photograph showing a cross-section of the conventional negative electrode active material.

Referring to FIG. 3A, the negative electrode active material according to the present invention is formed of a graphite core particle 110, a carbon coating layer 130 coating the graphite core particle 110, and metal particles 120 dispersed in the carbon coating layer 130. Here, since there is almost no pore in the graphite core particle, the thickness (a) of the carbon coating layer is large.

However, referring to FIG. 3B, the conventional negative electrode active material is formed of a graphite core particle 11, metal particles 12 disposed on the surface of the graphite core particle, and a carbon coating layer 13a coating the graphite core particle 11 and the metal particle 12.

In addition, since there are pores 14 in the graphite core particle, some materials for the carbon coating layer are introduced into the pores, and thus the carbon coating layer has a very small thickness (b). Due to the reduction of the thickness of the carbon coating layer, the metal particles are difficult to be disposed on or around the surface of the graphite core particle, resulting in degradation in cycle characteristics.

A method of forming a negative electrode active material according to the present invention will be described below.

First, a graphite core particle according to the present invention is prepared.

The graphite core particle can be currently used as a negative electrode material for a battery, which may be artificial graphite having a porosity of 0.07cc/g or less, and preferably, 0.025cc/g or less.

As described above, it is preferable that there is no pore in the graphite core particle according to the present invention. When the porosity is more than 0.07cc/g, the material for the carbon coating layer is introduced into a pore formed in the graphite core particle. Thus, although the carbon coating layer is formed of the same amount of material as that in the present invention, the thickness of the carbon coating layer is relatively small, and thus the metal particles are difficult to be disposed on or around the surface of the graphite core particle due to the carbon coating layer, resulting in degradation in cycle characteristics.

A metal-graphite composite is formed by uniformly dispersing metal particles on the surface of a graphite particle using a wet method and drying them at 80°C to form a uniformly dispersed metal particles on the graphite surface, and then annealing a dry mixture of the uniformly dispersed metal particles on the graphite surface and a carbon precursor at 800°C or more for 4 hours in a nitrogen atmosphere. Here, the carbon precursor is mixed with the metal in the same volume ratio.

For the composite, Si is selected from the group consisting of Cr, Sn, Si, Al, Mn, Ni, Zn, Co, In, Cd, Bi, Pb and V as the metal forming an alloy with lithium, since it has high capacities per weight and volume. During intercalation/deintercalation of lithium ions, in order to reduce stress resulting from volume expansion, the Si particle should be pulverized to an average particle size of 200nm or less.

The Si particle may be pulverized using a ball mill, a jet mill or an attrition mill (attritor), but the present invention is not limited to the pulverizing tool used herein.

Alternatively, the negative electrode active material formed by the above method may be deflocculated for use.

The method of forming a negative electrode active material according to the present invention is the same as described above. When the conventional negative electrode active material has a pore in the graphite core particle, a certain amount of material for the carbon coating layer is introduced into the pore during the coating of the carbon coating layer, resulting in a decrease in thickness of the carbon coating layer. For this reason, the metal particles are difficult to be disposed on the surface of the graphite core particle due to the carbon coating layer, resulting in degradation in cycle characteristics.

However, since an amount of the negative electrode active material according to the present invention introduced into a pore in the graphite core particle is so small to sufficiently coat the metal particles, it is easy to dispose the metal particles on or around the surface of the graphite core particle due to the carbon coating layer.

That is, the metal particles may affect other elements due to expansion in an electrode, or may be even broken down. In addition, the volume of the metal may be reduced during discharge, and thereby it may not be completely restored to the original state. Accordingly, there are much space around the metal particles, resulting in electrical insulation between the active materials, reduction in electric capacitance, and degradation of battery performance. However, the negative electrode active material according to the present invention can have a strong binding force due to the above-mentioned carbon coating layer, and thus volume expansion may be inhibited, thereby improving cycle characteristics.

Next, a negative electrode having a negative electrode active material and a lithium secondary battery according to the present invention will be described in detail.

First, the negative electrode having the negative electrode active material according to the present invention includes a negative electrode collector, and a negative electrode active material, which is the same as described above.

The negative electrode collector may be formed of copper or a copper alloy, and formed in a foil, a film, a sheet, a punched type, a porous type or a foamy type.

Then, the lithium secondary battery having the negative electrode active material according to the present invention includes a positive electrode having a positive electrode active material, a negative electrode having a negative electrode active material, a separator separating the positive electrode from the negative electrode, and an electrolyte. Here, the negative electrode active material is the same as described above.

The positive electrode may include a positive electrode active material which can reversibly intercalate and deintercalate lithium ions, and an exemplary example of the positive electrode active material can be lithium-transition metal oxide such as LiCoO₂, LiNiO₂, LiMnO₂, LiMn₂O₄ or LiNi_{1-x-y}CoₓM_{y}O₂ (0≤x≤1, 0≤y≤1, 0≤x+y≤, and M is metal such as Al, Sr, Mg or La). However, the present invention is not limited to these examples.

In addition, the positive electrode includes a positive electrode collector, which may be formed of aluminum or an aluminum alloy, and formed in a foil, a film, a sheet, a punched type, a porous type or a foamy type.

The separator may be formed of a resin layer such as polyethylene or polypropylene or a porous layer formed by coupling between a ceramic material and a binder, but the present invention is not limited to these examples.

The electrolyte includes a non-aqueous organic solvent, e.g. carbonate, ester, ether or ketone. The carbonate may include dimethyl carbonate (DMC), diethyl carbonate (DEC), dipropyl carbonate (DPC), methyl propyl carbonate (MPC), ethylpropyl carbonate (EPC), methylethyl carbonate (MEC), ethylene carbonate (EC), propylene carbonate (PC) or butylene carbonate (BC). The ester may include butyrolactone (BL), decanolide, valerolactone, mevalonolactone, caprolactone, n-methyl acetate, n-ethyl acetate, or n-propyl acetate. The ether may include dibutyl ether, and the ketone may include polymethylvinyl ketone. However, the present invention is not limited to the examples of the kind of the non-aqueous organic solvent.

When the non-aqueous organic solvent is a carbonate-based organic solvent, it may be formed by mixing cyclic carbonate with a carbonate chain. At this time, the cyclic carbonate is mixed with the carbonate chain in a volume ratio of 1:1 to 1:9, and preferably 1:1.5 to 1:4. In these ranges, the electrolyte may exhibit proper performance.

The electrolyte of the present invention may further include an aromatic hydrocarbon-based organic solvent as well as the carbonate-based solvent. The aromatic hydrocarbon-based organic solvent may be an aromatic hydrocarbon-based compound.

Specifically, the aromatic hydrocarbon-based organic solvent may include benzene, fluorobenzene, chlorobenzene, nitrobenzene, toluene, fluorotoluene, trifluorotoluene or xylene. In the electrolyte including the aromatic hydrocarbon-based solvent, a volume ratio of the carbonate-based solvent to the aromatic hydrocarbon-based solvent may be 1:1 to 30:1. In these ranges, the electrolyte mixture may exhibit proper performance.

In addition, the electrolyte according to the present invention includes a lithium salt, which acts as a source of lithium ions in a battery to allow basic operation of the lithium battery. The lithium salt includes at least one selected from the group consisting of LiPF₆, LiBF₄, LiSbF₆, LiAsF₆, LiClO₄, LiCF₃SO₃, LiN(CF₃SO₂)₂, LiN(C₂F₅SO₂)₂, LiAlO₄, LiAlCl₄, LiN(CₓF₂ₓ₊₁SO₂)(C_{y}F₂ₓ₊₁SO₂) (herein, x and y are natural numbers), and LiSO₃CF₃, or a combination thereof.

Here, the lithium salt may have a concentration of 0.6 to 2.0M, and preferably, 0.7 to 1.6M. When the concentration of the lithium salt is less than 0.6M, the electrolyte is decreased in conductivity, and thus decreased in performance. When the concentration of the lithium salt is more than 2.0M, the electrolyte is increased in viscosity, and thus decreased in mobility of the lithium ion.

The positive electrode active material and the negative electrode active material according to the present invention may be applied to a collector of a thin film to have appropriate thickness and length, and then wound or stacked together with a separator, which is an insulator, and thus an electrode group is formed. After that, the electrode group may be put into a can or a similar container, and an electrolyte is injected thereinto, so that a lithium secondary battery can be manufactured. The method of manufacturing a lithium secondary battery is well known to those skilled in the art, so the detailed descriptions thereof will be omitted.

An outer shape of the lithium secondary battery manufactured by the above method is not limited, and, for example, may be formed in a cylindrical, rectangular or pouch type.

Hereinafter, examples and comparative examples of the present invention will be described. The examples are provided only to understand the present invention, and thus the present invention is not limited to the following examples.

### Example 1

A positive electrode active material of LiCoO₂, a binder of polyvinylidene fluoride (PVDF) and a conductive material of carbon were mixed in a weight ratio of 92:4:4, and the mixture was dispersed in N-methyl-2-pyrollidon so that a positive electrode slurry was formed. After coating the slurry on a 20 µm aluminum foil, the slurry was dried and rolled to form a positive electrode. A negative electrode active material was made of a composite material of silicon and carbon, in which the graphite was used as a core particle, and the silicon particle was used as a metal particle. Here, the silicon particle was mixed with a certain amount of pitch-based carbon, and then the graphite core particle was coated with the pitch-based carbon having the silicon particle inside, thereby forming a carbon coating layer.

For an electrode plate, the composite described as the negative electrode active material was dry-mixed with 20 µm artificial graphite in a ratio of 7:3. The negative electrode active material, a binder of styrene-butadiene rubber and a thickener of carboxymethylcellulose were mixed in a weight ratio of 96:2:2, and then the mixture was dispersed in water, thereby forming a slurry for the negative electrode active material. After coating the slurry on a 15 µm copper foil, the slurry was dried and rolled to form a negative electrode.

Here, the core graphite having a porosity of 0.025±0.01cc/g or less was used to form a coating layer having a thickness of about 3 mm, and thus a porosity of the metal-graphite composite was 0.03±0.02cc/g.

After a 20 mm separator formed of a polyethylene (PE) film was introduced between the formed electrodes, it was wound and pressed to be inserted into a cylindrical can, and then an electrolyte was injected into the cylindrical can, thereby manufacturing a lithium secondary battery.

### Example 2

A core graphite having a porosity of 0.07±0.03cc/g was used to form a coating layer having a thickness of about 1 mm, and thus a porosity of a metal-graphite composite was 0.08±0.02cc/g. Then, a lithium secondary battery was manufactured using the metal-graphite composite in the same manner as in Example 1.

### Comparative Example 1

A positive electrode active material of LiCoO2, a binder of PVDF and a conductive material of carbon were mixed in a ratio of 92:4:4, and the mixture was dispersed in N-methyl-2-pyrollidon so that a positive electrode slurry was formed. After coating the slurry on a 20 µm aluminum foil, the slurry was dried and rolled to form a positive electrode. A negative electrode active material was made of a silicon-graphite composite active material, in which the graphite was used as a core particle, and the silicon particle was used as a metal particle. Here, in the composite active material, the silicon particle attached on a surface of the graphite core particle was coated with the same amount of pitch-based carbon as in Example 1, thereby forming a carbon coating layer.

That is, in order to form the carbon coating layer, in Example 1, the silicon particle was mixed with the pitch-based carbon, and then the graphite core particle was coated with the pitch-based carbon having the silicon particle inside, but in Comparative Example 1, the silicon particle attached on the surface of the graphite core particle was coated with the pitch-based carbon.

For an electrode plate, the composite described as the negative electrode active material was dry-mixed with 20 µm artificial graphite in a ratio of 7:3. The negative electrode active material, a binder of styrene-butadiene rubber and a thickener of carboxymethylcellulose were mixed in a weight ratio of 96:2:2, and then the mixture was dispersed in water, thereby forming a slurry for the negative electrode active material. After coating the slurry on a 15 µm copper foil, the slurry was dried and rolled to form a negative electrode.

Here, the core graphite having a porosity of 0.14±0.02cc/g or less was used to form a coating layer having a thickness of 200 µm or less, and thus a porosity of the metal-graphite composite was 0.15±0.03cc/g.

After a 20 µm separator formed of a polyethylene (PE) film was introduced between the formed electrodes, it was wound and pressed to be inserted into a cylindrical can, and then an electrolyte was injected into the cylindrical can, thereby manufacturing a lithium secondary battery.

### Comparative Example 2

A core graphite having a porosity of 0.09±0.03cc/g was used to form a coating layer having a thickness of 300 µm or less, and a porosity of a metal-graphite composite was 0.10±0.02cc/g. Then, a lithium secondary battery was manufactured using the metal-graphite composite in the same manner as in Comparative Example 1.

The lithium batteries in Examples 1 and 2 and Comparative Examples 1 and 2 were charged/discharged for 100 cycles under the conditions of a battery voltage of 2.5 to 4.35V and a current density of 1C. Then, a charge/discharge efficiency at the 1st cycle (ratio of discharge capacitance to a charge capacitance) and a capacitance retention ratio at the 100th cycle to the 1 st cycle were measured.

The measurement results are shown in Table 1.

**Table 1**

| | Porosity of Metal Composite (cc/g) | Charge/discharge Efficiency at the 1^{st} cycle (%) | Capacity Retention Ratio at the 100^{th} cycle (%) |
|---|---|---|---|
| Example 2 | 0.08 | 89 | 78 |
| Example 1 | 0.03 | 90 | 80 |
| C. Example 1 | 0.15 | 87 | 45 |
| C. Example 2 | 0.10 | 88 | 60 |

From the results shown in Table 1, it can be noted that Examples 1 and 2 exhibit better charge/discharge efficiencies at the 1st cycle than Comparative Examples 1 and 2.

Further, it can be noted that Examples 1 and 2 exhibit higher capacity retention ratios at the 100th cycle than Comparative Examples 1 and 2.

That is, when the metal-composite negative electrode active material was repeatedly charged and discharged, metal particles may affect other elements due to expansion in an electrode, or even broken down. In addition, since the metal volume is decreased during discharge, it may not be completely restored to the original state. Thus, there is much space around the meal particle, so that electrical insulation may easily occur between the active materials, resulting in decrease of battery capacity. However, the negative electrode active material according to the present invention has strong binding force resulting from the carbon coating layer, so that the volume expansion may be inhibited, and the cycle characteristics may be improved.

Consequently, a negative electrode active material, a negative electrode having the same, and a lithium secondary battery may inhibit volume change in metal particles, and thus a secondary battery having improved cycle characteristics may be provided.

Although a few embodiments of the present invention have been shown and described, it would be appreciated by those skilled in the art that changes may be made in this embodiment without departing from the principles of the invention, the scope of which is defined in the claims.

## Claims

1. A negative electrode active material, comprising:
a graphite core particle (110);
a carbon coating layer (130) coating the graphite core particle; and
metal particles (120) dispersed in the carbon coating layer,
wherein the carbon coating layer is coated to a thickness of 1 to 4 µm;
wherein the graphite core particle has a porosity of more than 0 to 0.07cc/g.

2. The negative electrode active material according to claim 1, wherein the negative electrode active material has a porosity of more than 0 to 0.08cc/g.

3. The negative electrode active material according to claim 1, wherein the negative electrode active material has a porosity of more than 0 to 0.03cc/g.

4. The negative electrode active material according to claim 1, wherein the graphite core particle has a porosity of more than 0 to 0.025cc/g.

5. The negative electrode active material according to claim 1, wherein the graphite core particle is formed of at least one selected from the group consisting of artificial graphite, natural graphite, graphitized carbon fiber, graphitized mesocarbon microbead and amorphous carbon.

6. The negative electrode active material according to claim 1, wherein the metal material is formed of at least one selected from the group consisting of Cr, Sn, Si, Al, Mn, Ni, Zn, Co, In, Cd, Bi, Pb and V.

7. A negative electrode, comprising:
a negative electrode collector; and
a negative electrode active material,
wherein the negative electrode active material comprises:
a graphite core particle (110);
a carbon coating layer (130) coating the graphite core particle; and
metal particles (120) dispersed in the carbon coating layer,
wherein the carbon coating layer is coated to a thickness of 1 to 4 µm;
wherein the graphite core particle has a porosity of more than 0 to 0.07cc/g.

8. The negative electrode according to claim 7, wherein the negative electrode active material is as claimed in any one of claims 2 to 6.

9. A lithium secondary battery, comprising:
a positive electrode having a positive electrode active material, a negative electrode having a negative electrode active material, a separator separating the positive electrode from the negative electrode and an electrolyte,
wherein the negative electrode active material comprises:
a graphite core particle (110);
a carbon coating (130) layer coating the graphite core particle; and
metal particles (120) dispersed in the carbon coating layer,
wherein the carbon coating layer is coated to a thickness of 1 to 4 µm
wherein the graphite core particle has a porosity of more than 0 to 0.07cc/g.

10. The lithium secondary battery according to claim 9, wherein the negative electrode active material is as claimed in any one of claims 2 to 6.

## Patentansprüche

1. Negatives aktives Elektrodenmaterial, umfassend:
ein Graphitkernpartikel (110);
eine Kohlenstoffdeckschicht (130), die das Graphitkernpartikel bedeckt; und
Metallpartikel (120), die in der Kohlenstoffdeckschicht dispergiert sind,
wobei die Kohlenstoffdeckschicht mit einer Dicke von 1 bis 4 µm aufgebracht ist;
wobei das Graphitkernpartikel eine Porosität von mehr als 0 bis 0.07 cc/g aufweist.

2. Negatives aktives Elektrodenmaterial nach Anspruch 1, wobei das negative aktive Elektrodenmaterial eine Porosität von mehr als 0 bis 0.08 cc/g aufweist.

3. Negatives aktives Elektrodenmaterial nach Anspruch 1, wobei das negative aktive Elektrodenmaterial eine Porosität von mehr als 0 bis 0.03 cc/g aufweist.

4. Negatives aktives Elektrodenmaterial nach Anspruch 1, wobei das negative aktive Elektrodenmaterial eine Porosität von mehr als 0 bis 0,025 cc/g aufweist.

5. Negatives aktives Elektrodenmaterial nach Anspruch 1, wobei das Graphitkernpartikel aus mindestens einem, ausgewählt aus der Gruppe bestehend aus künstlichem Graphit, natürlichem Graphit, graphitierter Kohlenstofffaser, graphitierter Mesokohlenstoff-Mikroperle und amorphem Kohlenstoff, gebildet ist.

6. Negatives aktives Elektrodenmaterial nach Anspruch 1, wobei das metallische Material aus mindestens einem, ausgewählt aus der Gruppe bestehend aus Cr, Sn, Si, Al, Mn, Ni, Zn, Co, In, Cd, Bi, Pb und V, gebildet ist.

7. Negative Elektrode, umfassend:
einen Kollektor der negativen Elektrode;
ein negatives aktives Elektrodenmaterial,
wobei das negatives aktives Elektrodenmaterial umfasst:
ein Graphitkernpartikel (110);
eine Kohlenstoffdeckschicht (130), die das Graphitkernpartikel bedeckt; und
Metallpartikel (120), die in der Kohlenstoffdeckschicht dispergiert sind,
wobei die Kohlenstoffdeckschicht mit einer Dicke von 1 bis 4 µm aufgebracht ist;
wobei das Graphitkernpartikel eine Porosität von mehr als 0 bis 0.07 cc/g aufweist.

8. Negative Elektrode nach Anspruch 7, wobei das negative aktive Elektrodenmaterial beschaffen ist, wie in einem der Ansprüche 2 bis 6 beansprucht.

9. Sekundäre Lithiumbatterie, umfassend:
eine positive Elektrode mit positivem aktivem Elektrodenmaterial, eine negative Elektrode mit negativem aktivem Elektrodenmaterial, einen Separator, der die positive Elektrode von der negativen Elektrode trennt, und eine Elektrolyten,
wobei das negative aktive Elektrodenmaterial umfasst:
ein Graphitkernpartikel (110);
eine Kohlenstoffdeckschicht (130), die das Graphitkernpartikel bedeckt; und
Metallpartikel (120), die in der Kohlenstoffdeckschicht dispergiert sind,
wobei die Kohlenstoffdeckschicht mit einer Dicke von 1 bis 4 µm aufgebracht ist;
wobei das Graphitkernpartikel eine Porosität von mehr als 0 bis 0.07 cc/g aufweist.

10. Sekundäre Lithiumbatterie nach Anspruch 9, wobei das negative aktive Elektrodenmaterial beschaffen ist, wie in einem der Ansprüche 2 bis 6 beansprucht.

## Revendications

1. Matériau actif d'électrode négative, comprenant :
une particule à noyau de graphite (110) ;
une couche de revêtement en carbone (130) couvrant la particule à noyau de graphite ; et
des particules métalliques (120) dispersées dans la couche de revêtement en carbone,
dans lequel la couche de revêtement en carbone est déposée sur une épaisseur allant de 1 à 4 µm ;
dans lequel la particule à noyau de graphite a une porosité de plus de 0 à 0,07 cc/g.

2. Matériau actif d'électrode négative selon la revendication 1, le matériau actif d'électrode négative ayant une porosité de plus de 0 à 0,08 cc/g.

3. Matériau actif d'électrode négative selon la revendication 1, le matériau actif d'électrode négative ayant une porosité de plus de 0 à 0,03 cc/g.

4. Matériau actif d'électrode négative selon la revendication 1, dans lequel la particule à noyau de graphite a une porosité de plus de 0 à 0,025 cc/g.

5. Matériau actif d'électrode négative selon la revendication 1, dans lequel la particule à noyau de graphite est formée d'au moins un élément choisi dans le groupe consistant en le graphite artificiel, le graphite naturel, une fibre de carbone graphitisée, une microbille de mésocarbone graphitisée et le carbone amorphe.

6. Matériau actif d'électrode négative selon la revendication 1, dans lequel le matériau métallique est formé d'au moins un élément choisi dans le groupe consistant en Cr, Sn, Si, Al, Mn, Ni, Zn, Co, In, Cd, Bi, Pb et V.

7. Électrode négative, comprenant :
un collecteur d'électrode négative ; et
un matériau actif d'électrode négative,
dans laquelle le matériau actif d'électrode négative comprend :
une particule à noyau de graphite (110) ;
une couche de revêtement en carbone (130) couvrant la particule à noyau de graphite ; et
des particules métalliques (120) dispersées dans la couche de revêtement en carbone,
la couche de revêtement en carbone étant déposée sur une épaisseur allant de 1 à 4 µm ;
la particule à noyau de graphite ayant une porosité de plus de 0 à 0,07 cc/g.

8. Électrode négative selon la revendication 7, dans laquelle le matériau actif d'électrode négative est tel que revendiqué dans l'une quelconque des revendications 2 à 6.

9. Batterie secondaire au lithium, comprenant :
une électrode positive ayant un matériau actif d'électrode positive, une électrode négative ayant un matériau actif d'électrode négative, un séparateur qui sépare l'électrode positive de l'électrode négative, et un électrolyte,
dans laquelle le matériau actif d'électrode négative comprend :
une particule à noyau de graphite (110) ;
une couche de revêtement en carbone (130) couvrant la particule à noyau de graphite ; et
des particules métalliques (120) dispersées dans la couche de revêtement en carbone,
la couche de revêtement en carbone étant déposée sur une épaisseur allant de 1 à 4 µm,
la particule à noyau de graphite ayant une porosité de plus de 0 à 0,07 cc/g.

10. Batterie secondaire au lithium selon la revendication 9, dans laquelle le matériau actif d'électrode négative est tel que revendiqué dans l'une quelconque des revendications 2 à 6.
